# EUROPEAN PATENT APPLICATION

(11) **EP 1 322 096 A2**
(43) Date of publication of application: **25.06.2003**
(21) Application number: 02396187.3
(22) Date of filing: 19.12.2002
(51) Int. Cl.: H04L 29/12

(54) **Method and system for addressing a communication device**

(30) Priority: 19.12.2001 FI 20012521
(71) Applicant: Sonera Oyj, 00510 Helsinki (FI)
(72) Inventor: Hämäläinen, Jori, 33100 Tampere (FI)
(74) Representative: Pursiainen, Timo Pekka

(57) **Abstract**

The invention relates to a method for addressing a communication device (8a, 8b) in a data network connection, wherein the communication device (8a, 8b) is defined an address identifying said communication device (8a, 8b) in a data network (2) for the time of a data network connection. The user of the communication device (8a, 8b) is defined an identification in the data network (2). When setting up the data network connection, it is determined in the data network (2), whether said identification has been defined to the user of said communication device (8a, 8b). If said identification has been allocated, it is set to correspond to said address. At the end of the connection, said identification is set to correspond to another address. The invention also relates to a system in which the method is applied.

## Description

The present invention relates to a method for addressing a communication device in a data network connection, in which the communication device is allocated an address for identifying said communication device in the data network for the time of the data network connection, and in which data network an identification is defined for the user of the communication device. The invention also relates to a system provided with means for defining an identifying address for a communication device in a data network for the time of a data network connection, and in which data network an identification is defined for the use of the communication device.

It is known that communication devices to be connected with data networks for communication must be provided with an address identifying said communication device, to distinguish the communication device from other communication devices connected with the data network. By using this address, it is possible to transmit data flows addressed to said communication device to this communication device. In a corresponding manner, data flows to be transmitted from a communication device can be provided with the address of this transmitting communication device, wherein the communication device that transmitted the data flow is known in the data network. Such an address consists, for example in the Internet Protocol (IP) used in the Internet data network, of a sequence of numbers. The address system according to the protocol version 4 (Ipv4) applies an address consisting of four octal digits. These octal digits are separated from each other by dots (dot notation system). Consequently, the address is of the form 123.456.789.012. However, it is relatively difficult to remember such a number sequence, for which reason a system has been developed, in which an identification is defined for the address. The address can thus be given in text format, for example in the form name.domain.attribute, such as department.company.fi, or for example firstname.lastname. company.com. The name identifies the address within a given domain. The domain is, for example, a local area network within a company. The attribute indicates more precisely the type of the domain (for example, .net, .org, .com, .biz) or the country in which said domain is located (for example, .fi, .de). The address in the text format, *i.e.* the identification, is converted to the corresponding numerical address in a so-called name server (Domain Name Server, DNS) or the like. In this way, it can be made easier to remember addresses.

In a number of data networks, data is transmitted in packet format, wherein each packet is provided with the address data of the receiver and possibly also the address data of the sender. On the basis of the address data of the receiver, the packet is routed to the correct receiving device in the data network. The sender address data can be used, for example, in situations in which the sender is informed, for example, of the delivery of packets and possible transmission errors.

However, the communication device does not necessarily have static address data, but it is possible to use a so-called dynamic addressing system. In this system, when the user begins to set up a connection with the data network, the communication device is first allocated an address for the connection. This may be performed, for example, in such a way that the user has entered a subscriber contract with a service provider, such as an Internet service provider. Thus, the user has been informed of connection data, such as a telephone number, which the communication device contacts to set up a data network connection. Thus, the server of the service provider allocates an address for this communication device. This allocated address is used for the time of the data network connection. Next time when the user contacts the server, an address is allocated again but it is not necessarily the same address as the one used the previous time. This kind of an address change may be a problem particularly when portable communication devices are used, because the user's portable communication device cannot be contacted if its address is not known.

For the above-presented problem causing the address change, an application program has been developed, whereby it is possible to connect the identification with the variable address. However, this requires that the application is loaded in the user's communication device and that the application is started. Furthermore, the communication device must have a connection to the data network all the time to maintain the function of connecting the identification with the address. Such an application is not even available for all communication devices.

It is an aim of the present invention to provide a method and a system, in which the user's communication device can be allocated a constant address which is used irrespective of the communication device used by the user at the time. The invention is based on the idea that the user is allocated a so-called alias name (identification) which is preferably always the same, wherein this alias name is used to forward information addressed to the alias name to the communication device whose address is connected to this alias name at the time. To put it more precisely, the method according to the present invention is primarily characterized in that, when setting up the data network connection, it is determined in the data network whether said identification has been defined for the user of said communication device, wherein if said identification has been defined, it is set to correspond to said address, and that at the end of the connection, said identification is set to correspond to another address. The system according to the present invention is primarily characterized in that the system comprises means for determining, upon setting up the data network connection, whether said identification has been defined for the user of said communication device, means for setting the identification to correspond to said address if said identification has been defined, and means for setting said identification to correspond to another address at the end of the connection.

The present invention shows remarkable advantages over solutions of prior art. By means of the method according to the invention, it is possible to increase the accessibility of the user, because transmissions addressed to one address of the user can be forwarded to the communication device which the user has active at the time. Thus, it becomes easier, for example, to arrange a video conference, because the user's address does not need to be inquired separately, but the same identification can always be used. Furthermore, the method of the invention makes it possible that the user is not bound to a specific communication device but may communicate with the data network by means of any of his/her communication devices provided with means for logging in the data network. Also, the use of the method does not require any operations by the user, such as starting an application.

In the following, the invention will be described in more detail with reference to the appended drawings, in which
- Fig. 1: shows a system according to a preferred embodiment of the invention in a reduced chart, and
- Fig. 2: shows the function of the method according to a preferred embodiment of the invention in a flow chart.

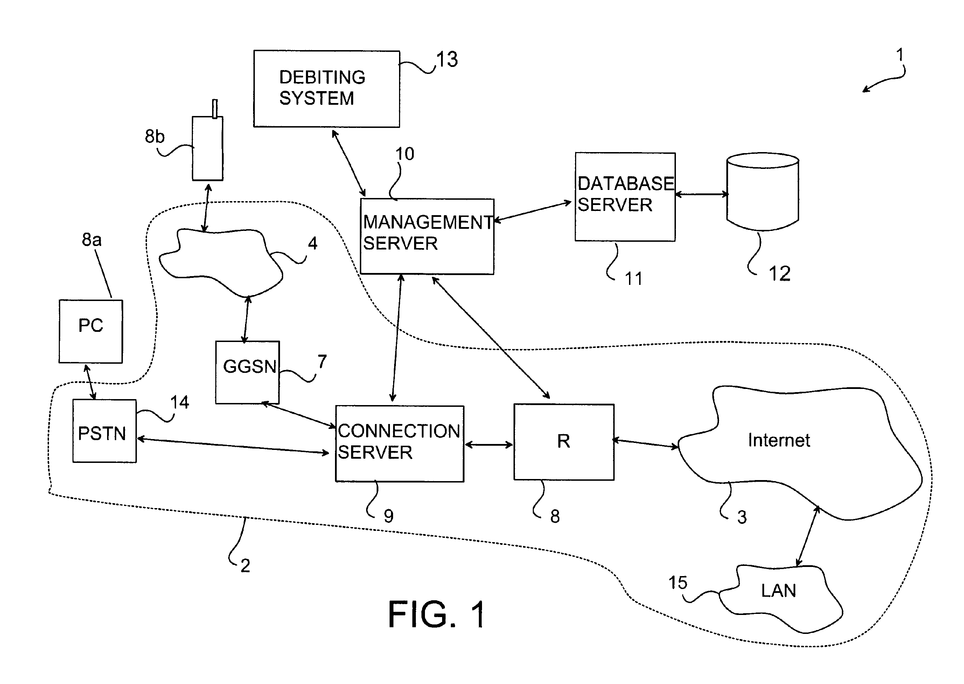

In the following, the invention will be exemplified with a system 1 shown in Fig. 1. The system comprises a data network 2, which in this preferred embodiment consists of, for example, the Internet data network 3, a public switched telecommunication network 14, and a mobile communication network 4, such as a GPRS packet network. However, it will be obvious that the invention is not limited solely to these networks. The Internet data network 3 is provided with routers 5 (R) as well as at least one domain name server 6 (DNS). The routers 5 are used for the transmission of packets in the Internet data network 3. The interface between the Internet data network 3 and the mobile communication network 4 is a gateway GPRS support node 7 (GGSN) which is used in communication between the Internet data network 3 and the mobile communication network 4. The user can use his/her communication device 8a, 8b to be connected to the data network 2 either via the Internet data network 3 or the mobile communication network 4.

The data network 2 comprises a connection server 9, through which the communication device 8a, 8b can be arranged in a data transmission connection with the data network 2. For setting up the connection, it is possible to use, for example, the public switched telephone network 14 (PSTN), a wireless communication network (the mobile communication network 4), or a local area network 15. The data network 2 constitutes a communication channel (tunnel) between the communication device 8a, 8b and the connection server 9. For example, in the case of a mobile communication network 4, such as the GPRS (General Packet Radio Service), this communication channel is called the GPRS Tunneling Protocol (GTP). The connection server 9 is, for example, the server device of an operator providing Internet services. The user has thus entered into a contract with the operator, wherein the user has been allocated a user identification and a static address, in addition to which the user will need a password to set up a connection.

The connection server 9 is arranged to communicate *e.g.* with a management server 10. Thus, at the moment of setting up the connection, the user identification and password are preferably transmitted to the connection server 9 to authenticate the user and to prevent misuse. However, it will be obvious that also other methods can be applied for user authentication. After this, the connection server 9 retrieves the identification data via the management server 10. The connection server 9 preferably transmits a connection set-up message complying with an authentication protocol, such as the Radius (Remote Authentication Dial In User Service), to the management server 10. The Radius is a client-server model in which the connection server 9 (Radius client) transmits the user's connection request to the management server 10 and operates according to the response received by it. The management server 10 authenticates the user and returns the configuration data, on the basis of which services are allocated to the user by the connection server 9. A debiting system 13 is used for debiting the clients for the services.

In the connection set-up message, the user identification and the password are preferably transmitted in a format encrypted with an encryption key. The management server 10 communicates with a database server 11 which comprises an authentication database 12. The management server 10 transmits the messages received from the connection server 9 further to the database server 11. Thus, the database server 11 retrieves the authentication data from an authentication database 12 on the basis of the user identification and the password. The authentication database 12 contains authentication data about registered users, for example, to allow the use of the services to registered users only. After the user has been authenticated and the user's right to use the desired services has been confirmed, the management server 10 starts to configure the connection. The purpose of this is to set up a data transmission connection between the connection server 9 and the data network 2 for using the service.

In the method according to an advantageous embodiment of the invention, the user is provided with a so-called follow-up service which is used when the user is allocated a dynamic address in connection with logging in the data network 2. Such a situation may come up, for example, when the user is logged in the data network 2 by means of the mobile communication network 4, but the situation may also come up when logging in through a public switched telecommunication network. Let us assume that the user is provided with a static identification, such as george.company.com, which is used when logging in from a given location, for example, in a local area network 15.

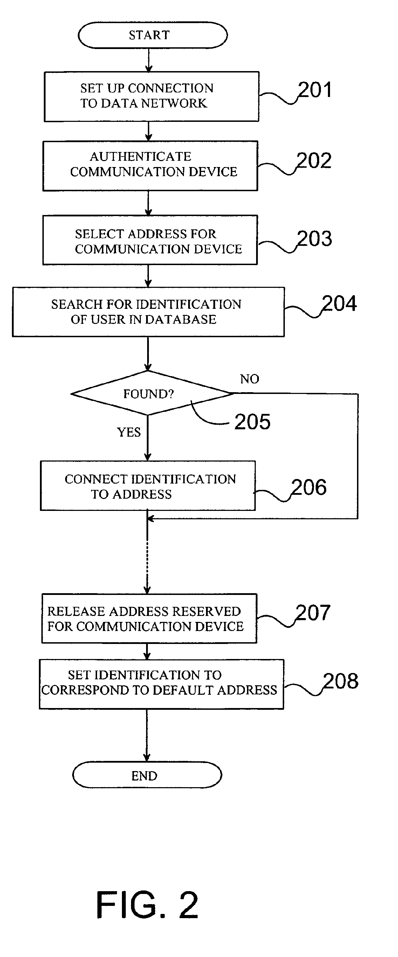

In the method according to the invention, the user data are supplemented with information indicating that the user has been allocated an address transformation service. Consequently, in a situation in which the user sets up a connection to the data network 2 from another location than the standard location, the following steps are preferably taken, with reference to the flow chart of Fig. 2. For example, when logging in via the mobile communication network 4, the user starts to set up a connection from a portable communication device 8b. This step is represented by block 201 in Fig. 2. When setting up the connection, the user is authenticated (block 202) *e.g.* to secure that the user has the valid access right to the data network 2. The user is identified *e.g.* on the basis of the phone number. This calling phone number, *i.e.* A-number, is normally transmitted in a telecommunication network, such as the mobile communication network 4. From the mobile communication network 4, information about the connection set-up as well as information about the user is transmitted to the management server 10. On the basis of the user information, the management server 10 uses the database 12 to determine that the user is authorized to use the service, and typically allocates the user a dynamic address (*e.g.* IP address) from its own address space (block 203). It is also possible that the user has been allocated a static IP address which is used *e.g.* when using a specific communication device. The user may also have more than one static address reserved for different communication devices 8a, 8b. For example, one static address is reserved for the wireless communication device 8b, to be used in connections to be set up via the mobile communication network. In a corresponding manner, the user may have a communication device in a local area network 15, for which device another static address is reserved in the address space of this local area network 15.

After the user has been authenticated and the user rights have been confirmed, the management server 10 retrieves information about the user profile from the database 12 and configures specific elements in the data network 2 according to the user profile. In the user information, the management server 10 can find, for example, that a follow-up service has been activated for the user. Thus, the management server 10 configures the name service in such a way that a search for the static identification reserved for the user (for example, said george.company.com) is made in the user information (block 204), and if the identification was found (block 205), the identification is connected to the address reserved for the connection (block 206). After this, all the messages (data packets *etc.)* addressed to this identification are forwarded to this reserved address. Consequently, also in this situation, information can be transmitted to the user by defining the user's static identification as the address. The name service takes care of the correct routing of the data.

At the stage when the user closes the session, the dynamic address possibly reserved for the user for the time of the connection is released (block 207). Furthermore, the name service is preferably reconfigured so that a default address, *e.g.* the address of the user's communication device 8a in said local area network 15, is set to correspond to the user identification (block 208). In the situation that the user is not logged in the data network 2 by any communication device 8a, 8b, it is possible, in an advantageous embodiment of the invention, to direct messages addressed to the user to a static web server or the like, by setting the address of an e-mail service, or the like, defined for the user to correspond to the user identification in this server. In this way, the user can retrieve incoming messages from this server when he/she is logged in the data network 2 again.

In the method according to an advantageous embodiment of the invention, the user him/herself can define which address is used as said default address. The user can define the default address *e.g.* from a work station 8a coupled to the local area network 15 when he/she is logged in the local area network 15. The local area network 15 preferably transmits information about the default address to the connection server 9 in which the name server for this user is located. The connection server 9 stores the address data in the user profile.

In a situation in which the user sets up a connection via a public switched telecommunication network, the operation is, in principle, similar to that presented above.

Although it was stated above that the user is identified on the basis of the A-number, it is also possible to use other identification data for the authentication, such as a user identification and a password entered by the user in the communication device 8a, 8b. In this alternative, the connection server does not need to comprise information about the telephone numbers of the telecommunication terminals used by users. In a wireless local area network, this identification used for the communication device 8a, 8b can be, for example, the address of the MAC layer (Media Access Control).

The communication device 8a, 8b is, for example, a personal computer (PC) comprising a modem, or the like, for logging in the data network 2 via a public switched telecommunication network. The data processing device can also be a wireless communication device with data processing facilities. On the other hand, the modem used can be a radio card or a corresponding wireless modem, wherein the mobile communication network 4 or the wireless local area network (not shown) is used for the log-in.

It is obvious that the present invention is not limited solely to the above-presented embodiments but it can be modified within the scope of the appended claims.

## Claims

1. A method for addressing a communication device (8a, 8b) in a data network connection, wherein an address identifying said communication device (8a, 8b) is allocated for the communication device (8a, 8b) in a data network (2) for the time of the data network connection, and in which data network (2) an identification is defined for the user of the communication device (8a, 8b), **characterized in that** when setting up the data network connection, it is determined in the data network (2) whether said identification has been defined for the user of the communication device (8a, 8b), wherein if said identification has been defined, it is set to correspond to said address, and that at the end of the connection, said identification is set to correspond to another address.

2. The method according to claim 1, **characterized in that** said address is a dynamic address, wherein it is selected in connection with each setting up of a connection.

3. The method according to claim 1 or 2, **characterized in that** a service address is allocated for the user, wherein if the user is not logged in the data network (2) by any communication device (8a, 8b), said identification is set to correspond to said service address to forward incoming messages for the user to said service address.

4. The method according to claim 3, **characterized in that** said service address used is the address of the web server of the data network (2).

5. The method according to claim 1, 2, 3 or 4, **characterized in that** a user identification is used to confirm the user's access rights, that said user identification is transmitted from the communication device to the data network upon setting up a connection, wherein said user identification is used to determine said identification.

6. The method according to claim 1, 2, 3 or 4, **characterized in that** the connection from the communication device to the data network is set up via a telecommunication network, that an A subscriber number is transmitted from the communication device to the data network (2), and that said A subscriber number is used to determine said identification.

7. The method according to claim 1, 2, 3 or 4, **characterized in that** the connection from the communication device to the data network is set up via a local area network (15), that the local area network address of the communication device is transmitted from the communication device to the data network (2), and that said local area network address is used to determine said identification.

8. A system comprising means for determining an address identifying a communication device (8a, 8b) in a data network (2) for the time of a data network connection, and in which data network (2) the user of the communication device (8a, 8b) is allocated an identification, **characterized in that** the system comprises means for determining, upon setting up the data network connection, whether said identification has been defined for the user of said communication device (8a, 8b), means for setting the identification to correspond to said address if said identification has been defined, and means for setting said identification to correspond to another address at the end of the connection.

9. The system according to claim 8, **characterized in that** said address is a dynamic address, wherein the system comprises means for selecting the address in connection with each setting up of a connection.

10. The system according to claim 8 or 9, **characterized in that** a service address has been allocated for the user, and that the system comprises means (10) for setting said identification to correspond to said service address for forwarding incoming messages for the user to said service address in a situation in which the user is not logged in the data network (2) by any communication device (8a, 8b).

11. The system according to claim 10, **characterized in that** the data network (2) comprises a web server, and that the address of said web server is arranged to be used as said service address.

12. The system according to claim 8, 9, 10 or 11, **characterized in that** a user identification has been allocated to authenticate the user's access rights, that the system comprises means for transmitting said user identification from the communication device to the data network upon setting up a connection, and means for using said user identification in determining said identification.

13. The system according to claim 8, 9, 10 or 11, **characterized in that** it comprises means for setting up the connection from the communication device to the data network via a telecommunication network, means for transmitting an A subscriber number from the communication device to the data network (2), and means for using said A subscriber number to determine said identification.

14. The system according to claim 8, 9, 10 or 11, **characterized in that** it comprises means for setting up the connection from the communication device to the data network via a local area network (15), means for transmitting the local area network address of the communication device from the communication device to the data network (2), and means for using said local area network address to determine said identification.

15. The system according to any of the claims 8 to 14, **characterized in that** the data network comprises a mobile communication network (4).

16. The system according to any of the claims 8 to 15, **characterized in that** the data network comprises the Internet data network (4).
